(19) Europäisches Patentamt
European Patent Office
Office européen des brevets

(11) EP 3 322 144 A1

(12) EUROPEAN PATENT APPLICATION
published in accordance with Art. 153(4) EPC

(43) Date of publication:
**16.05.2018 Bulletin 2018/20**

(21) Application number: **16823667.7**

(22) Date of filing: **11.03.2016**

(51) Int Cl.:
***H04L 25/03*** *(2006.01)*

(86) International application number:
**PCT/CN2016/076159**

(87) International publication number:
**WO 2017/008520 (19.01.2017 Gazette 2017/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.07.2015 CN 201510405678**

(71) Applicant: **Datang Mobile Communications Equipment Co., Ltd.**
**Beijing 100083 (CN)**

(72) Inventors:
- **WANG, Xi**
  **Beijing 100083 (CN)**
- **WU, Gang**
  **Beijing 100083 (CN)**

(74) Representative: **Nony**
**11 rue Saint-Georges**
**75009 Paris (FR)**

# (54) METHOD AND DEVICE FOR SUPPRESSING INTERFERENCE SIGNAL

(57) A method and device for suppressing an interference signal, the method comprising: performing signal reduction on a received signal of a given cell; performing channel estimation on the signal-reduced received signal of the given cell on the basis of a reference signal of the given cell and a reference signal of a neighboring cell to obtain a precise interference signal; and performing signal suppression on the precise interference signal. In the present application, before acquiring an interference signal, signal reduction is first performed on a received signal of a given cell, and then using a signal obtained by performing the signal reduction on the received signal of the given cell, estimation of interference is performed on the basis of scheduling information of a joint neighboring cell to acquire an accurate interference signal, achieving improved suppression of neighboring cell uplink co-channel interference.

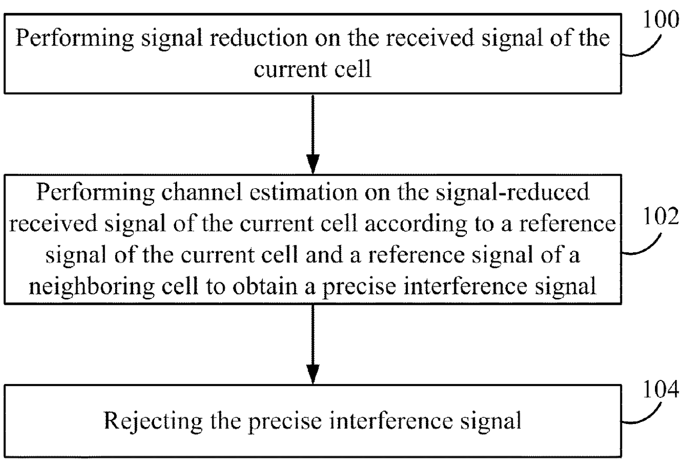


Fig.1

EP 3 322 144 A1

## Description

### Field

The invention relates to the field of communications, in particular to a method and device for rejecting interference signal.

### Background

In the Long Term Evolution (LTE) system, co-frequency networking is mostly adopted in actual network planning, thus co-frequency interference may occur in the system.

At present, an LTE receiver usually adopts the uplink Interference Rejection Combining (IRC) algorithm to suppress interference. The general IRC is as follows:

$$x = (H^H SH + C)^{-1} H^H Sy .$$

Where *x* is the equilibrium result; *y* is the antenna signal; *H* is the channel estimation result, $S = C_n^{-1}$, $C = C_x^{-1}$; $C_n^{-1}$ is the interference and noise covariance matrix of $N_R \times N_R$; $C_x^{-1}$ is the transmit signal covariance matrix of $N_T \times N_T$; $N_R$ is the number of receiving antennas; $N_T$ is the number of transmitting antennas.

The key to IRC is to obtain relatively precise channel estimation result H and $C_n$, and the general method for computing $C_n$ is as follows:

$$C_n = E\left[\| \mathrm{r} - \mathrm{H_i s_i} \|_2^2\right] = E\left[\left\| \frac{\mathrm{r} - \mathrm{H_i s_i}}{\mathrm{s_i}} \right\|_2^2\right] = E\left[\left\| \frac{\mathrm{r}}{\mathrm{s_i}} - \mathrm{H_i} \right\|_2^2\right].$$

Where $S_i$ is the pilot sequence, and $\|S_i\|=1$.

Accordingly, $C_n$ can be obtained based on the difference between the initial channel estimation result (receive signal r divided by pilot sequence $S_i$) and the channel estimation result Hi of the user i, namely, the initial channel estimation result deducted by the final channel estimation result of user i.

The channel estimation result Hi of user i can generally be obtained through windows selection denoising of the initial channel estimation result.

If co-frequency interference from a neighboring cell exists in the data received, the pilot position of the transmitted signal of the user of a neighboring cell is also Zadoff sequence (i.e., Physical Random Access Channel sequence) which has favorable self-correlation and co-correlation, so interference is in a highly discrete state in the pilot symbol, and no precise channel estimation result H and $C_n$ can be obtained from simple denoising based on the window.

Therefore, IRC is also improved through joint detection algorithm. Scheduling information of the neighboring cell is transmitted to the primary cell, channel estimation is performed on the received antenna signal in the primary cell using the cell parameters and scheduling information of the neighboring cell, and the channel estimation result of each user acquired finally is interference to the primary cell.

Due to the fine correlation property of the LTE uplink demodulation reference channel, compared with traditional IRC algorithm, the improved joint detection algorithm can acquire more precise channel estimation and interference detection results. However, in actual environment, signal of the current cell may be much higher than interference of the neighboring cell, so no precise interference can be calculated out by the adoption of the joint detection algorithm.

### Summary

The application provides a method and device for rejecting interference signal to solve the problem that the interference acquired is not precise.

In order to solve the above problem, the application discloses a method for rejecting interference signal, including:

performing signal reduction on a received signal of a current cell;
performing channel estimation on the signal-reduced received signal of the current cell according to a reference

signal of the current cell and a reference signal of a neighboring cell to obtain a precise interference signal; and rejecting the precise interference signal.

Preferably performing channel estimation on the signal-reduced received signal of the current cell according to the reference signal of the current cell and the reference signal of the neighboring cell to obtain the precise interference signal includes:

performing channel estimation on the signal-reduced received signal of the current cell according to the reference signal of the current cell to obtain a rough interference signal; and
performing channel estimation on the rough interference signal according to the reference signal of the neighboring cell to obtain the precise interference signal.

Preferably performing channel estimation on the signal-reduced received signal of the current cell according to the reference signal of the current cell to obtain the rough interference signal includes:

obtaining the conjugate of the reference signal of the current cell, then multiplying with a pilot symbol of the signal-reduced received signal of the current cell to obtain a rough channel frequency-domain response with reference signal eliminated;
subjecting the rough channel frequency-domain response to inverse discrete Fourier transform to obtain a rough channel time-domain impulse response;
subjecting the rough channel time-domain impulse response to multi-user separation and windows selection denoising to obtain a rough single-user time-domain impulse response;
subjecting the rough single-user time-domain impulse response to discrete Fourier transform to obtain a rough channel estimation result of each user; and
subtracting the rough channel estimation result of each user from the rough channel frequency-domain response to obtain the rough interference signal.

Preferably performing channel estimation on the rough interference signal according to the reference signal of the neighboring cell to obtain the precise interference signal includes:

obtaining the conjugate of the reference signal of the neighboring cell, and multiplying with the rough interference signal to obtain a precise channel frequency-domain response with reference signal eliminated;
subjecting the precise channel frequency-domain response to inverse discrete Fourier transform to obtain a precise channel time-domain impulse response;
subjecting the precise channel time-domain impulse response to multi-user separation and windows selection denoising to obtain a precise single-user time-domain impulse response;
subjecting the precise single-user time-domain impulse response to Fourier transform to obtain a precise channel estimation result of the neighboring cell; and
subtracting the precise channel estimation result of the neighboring cell from the rough interference signal to obtain the precise interference signal.

Preferably rejecting the precise interference signal includes:

performing uplink Interference Rejection Combining detection using the precise interference signal to obtain a detection result; and
rejecting the precise interference signal according to the detection result.

The application also discloses a device for rejecting interference signal, including:

a signal reduction module configured to perform signal reduction on a received signal of a current cell;
a channel estimation module configured to perform channel estimation on the signal-reduced received signal of the current cell according to a reference signal of the current cell and a reference signal of a neighboring cell to obtain a precise interference signal; and
an interference rejection module configured to reject the precise interference signal.

Preferably the channel estimation module includes:

a rough interference signal acquisition module configured to perform channel estimation on the signal-reduced

received signal of the current cell according to the reference signal of the current cell to obtain a rough interference signal; and

a precise interference signal acquisition module configured to perform channel estimation on the rough interference signal according to the reference signal of the neighboring cell to obtain the precise interference signal.

Preferably the rough interference signal acquisition module includes:

a rough channel frequency-domain response acquisition module configured to obtain the conjugate of the reference signal of the current cell, then multiply with a pilot symbol of the signal-reduced received signal of the current cell to obtain a rough channel frequency-domain response with reference signal eliminated;

a rough channel time-domain impulse response acquisition module configured to subject the rough channel frequency-domain response to inverse discrete Fourier transform to obtain a rough channel time-domain impulse response;

a rough single-user time-domain impulse response acquisition module configured to subject the rough channel time-domain impulse response to multi-user separation and windows selection denoising to obtain a rough single-user time-domain impulse response;

a rough channel estimation result acquisition module configured to subject the rough single-user time-domain impulse response to discrete Fourier transform to obtain a rough channel estimation result of each user; and

a rough interference signal acquisition module configured to subtract the rough channel estimation result of each user from the rough channel frequency-domain response to obtain the rough interference signal.

Preferably the precise interference signal acquisition module includes:

a precise channel frequency-domain response acquisition module configured to obtain the conjugate of the reference signal of the neighboring cell, then multiply with the rough interference signal to obtain a precise channel frequency-domain response with reference signal eliminated;

a precise channel time-domain impulse response acquisition module configured to subject the precise channel frequency-domain response to inverse discrete Fourier transform to obtain a precise channel time-domain impulse response;

a precise single-user time-domain impulse response acquisition module configured to subject the precise channel time-domain impulse response to multi-user separation and windows selection denoising to obtain a precise single-user time-domain impulse response;

a precise channel estimation result acquisition module configured to subject the precise single-user time-domain impulse response to Fourier transform to obtain a precise channel estimation result of the neighboring cell; and

a precise interference signal acquisition module configured to subtract the precise channel estimation result of the neighboring cell from the rough interference signal to obtain the precise interference signal.

Preferably the interference rejection module includes:

an interference detection module configured to perform uplink Interference Rejection Combining detection using the precise interference signal to obtain a detection result; and

a precise interference rejection module configured to reject the precise interference signal according to the detection result.

Compared with the background art, the invention has the following advantages.

Before obtaining the interference signal, the received signal of the current cell is subjected to signal reduction. Estimate is made to interference using the signal with the received signal of the current cell reduced according to the scheduling information of the neighboring cell to obtain a precise interference signal, which has a better rejection effect to the uplink co-frequency interference of the neighboring cell.

## Brief Description of the Drawings

Figure 1 is a flowchart of a method for rejecting interference signal in accordance with the first embodiment of the application;

Figure 2 is a flowchart of a method for rejecting interference signal in accordance with the second embodiment of the application;

Figure 3 is a structural diagram of a device for rejecting interference signal in accordance with the third embodiment of the application; and

Figure 4 is the structural diagram of a device for rejecting interference signal in accordance with the fourth embodiment of the application.

## Detailed Description

In order to make the objects, characteristics and advantages of the application more apparent and understandable, the present application will be described below in details with reference to the drawings and embodiments.

The method and device for rejecting interference signal in accordance with the application will be described in detail by some embodiments.

First Embodiment

A method for rejecting interference signal in accordance with the embodiment of the application will be described in detail.

Referring to figure 1, the flowchart of a method for rejecting interference signal in accordance with the embodiment of the application is illustrated.

Step 100 is to perform signal reduction on the received signal of the current cell.

Interference from the received signal of the current cell is stronger than the interference from the neighboring cell, so the received signal of the current cell is subjected to signal reduction first.

Specifically, the standard or degree of reduction of the received signal of the current cell can be determined in view of actual conditions. The reduction of the received signal of the current cell will not be limited in the embodiment of the application.

Step 102 is to perform channel estimation on the signal-reduced received signal of the current cell according to a reference signal of the current cell and a reference signal of a neighboring cell to obtain a precise interference signal.

Scheduling information of the neighboring cell can be transmitted to the current cell, and the antenna signal received in the current cell can be subjected to channel estimation based on the cell parameter and scheduling information of the neighboring cell to obtain a precise interference signal. It needs to be noted that the precise interference signal is a more precise interference signal compared with the interference signal obtained in the prior art.

Step 104 is to reject the precise interference signal.

In conclusion, in the technical scheme of the application, before obtaining the interference signal, the received signal of the current cell is subjected to signal reduction. Estimate is made to interference using the signal with the received signal of the current cell reduced according to the scheduling information of the neighboring cell to obtain a precise interference signal, which has a better rejection effect to the uplink co-frequency interference of the neighboring cell.

Second Embodiment

A method for rejecting interference signal in accordance with the embodiment of the application will be described in detail.

Referring to figure 2, the flowchart of a method for rejecting interference signal in accordance with the embodiment of the invention is illustrated.

Step 200 is to perform signal reduction on the received signal of the current cell.

Interference from the received signal of the current cell is stronger than the interference from the neighboring cell, so the received signal of the current cell is subjected to signal reduction first.

Specifically, the standard or degree of reduction of the received signal of the current cell can be determined in view of actual conditions. The reduction of the received signal of the current cell will not be limited in the embodiment of the application.

Step 202 is to perform channel estimation on the signal-reduced received signal of the current cell according to a reference signal of the current cell and a reference signal of a neighboring cell to obtain a precise interference signal.

Scheduling information of the neighboring cell can be transmitted to the current cell, and the antenna signal received in the current cell can be subjected to channel estimation based on the cell parameter and scheduling information of the neighboring cell to obtain a precise interference signal.

It should be noted that the above precise interference signal is a more precise interference signal compared with the interference signal obtained in the prior art.

Preferably, step 202 can include the following steps.

Step 2021 is to perform channel estimation on the signal-reduced received signal of the current cell according

to a reference signal of the current cell to obtain a rough interference signal.

Preferably, step 2021 can include:

1) Obtaining the conjugate of the reference signal of the current cell, then multiplying with the pilot symbol of the signal-reduced received signal of the current cell to obtain a rough channel frequency-domain response with reference signal eliminated;
2) Subjecting the rough channel frequency-domain response to inverse discrete Fourier transform (IDFT) to obtain a rough channel time-domain impulse response.
3) Subjecting the rough channel time-domain impulse response to multi-user separation and windows selection denoising to obtain a rough single-user time-domain impulse response.
4) Subjecting the rough single-user time-domain impulse response to DFT to obtain the rough channel estimation result of each user.
5) Subtracting the rough channel estimation result of each user from the rough channel frequency-domain response to obtain the rough interference signal.

For example, the channel estimation result Hi of user i can generally be obtained through windows selection denoising of the initial channel estimation result. Specific steps are as follows.

Step 1: Obtaining the conjugate of the known reference signal $r_{u,v}^{(\alpha)}$, then multiplying with the pilot symbol $e_{\text{freq,P}}^{(\text{k}_{\alpha\text{R}},\text{n}_\text{s})}$ to obtain the channel frequency-domain response $e_{\text{freq,ch}}^{(\text{k}_{\alpha\text{R}},\text{n}_\text{s})}$ with reference symbol eliminated.

Step2: Subjecting $e_{\text{freq,ch}}^{(\text{k}_{\alpha\text{R}},\text{n}_\text{s})}$ to Inverse Discrete Fourier Transform (IDFT) to obtain the channel time-domain impulse response $e_{\text{time,ch}}^{(\text{k}_{\alpha\text{R}},\text{n}_\text{s})}$.

Step3: Subjecting $e_{\text{time,ch}}^{(\text{k}_{\alpha\text{R}},\text{n}_\text{s})}$ to multi-user separation and windows selection denoising to obtain the single-user time-domain impulse response $e_{\text{time,ch}}^{(\text{k}_{\alpha\text{R}},\text{k}_\text{UE},\text{n}_\text{s})}$ after windows selection denoising.

Step4: Subjecting $e_{\text{time,ch}}^{(\text{k}_{\alpha\text{R}},\text{k}_\text{UE},\text{n}_\text{s})}$ to Discrete Fourier Transform (DFT) to obtain the channel estimation result $H^{(\text{k}_{\alpha\text{R}},\text{k}_\text{UE},\text{n}_\text{s})}$ of each user.

Step5: $e_{\text{freq,ch}}^{(\text{k}_{\alpha\text{R}},\text{n}_\text{s})} - H^{(\text{k}_{\alpha\text{R}},\text{k}_\text{UE},\text{n}_\text{s})}$ to obtain the rough interference signal $I_{\text{freq,ch}}^{(\text{k}_{\alpha\text{R}},\text{n}_\text{s})}$.

Step 2022 is to perform channel estimation on the rough interference signal according to a reference signal of the neighboring cell to obtain a precise interference signal.

Preferably, step 2022 can include:

6) Obtaining the conjugate of the reference signal of the neighboring cell, then multiplying with the rough interference signal to obtain a precise channel frequency-domain response with reference signal eliminated.
7) Subjecting the precise channel frequency-domain response to IDFT to obtain a precise channel time-domain impulse response.
8) Subjecting the precise channel time-domain impulse response to multi-user separation and windows selection denoising to obtain a precise single-user time-domain impulse response.
9) Subjecting the precise single-user time-domain impulse response to Fourier transform to obtain the precise channel estimation result of the neighboring cell.
10) Subtracting the precise channel estimation result of the neighboring cell from the rough interference signal to obtain the precise interference signal.

For example, the process of performing channel estimation on the rough interference signal according to a reference signal of the neighboring cell to obtain a precise interference signal specifically includes the following steps.

Step6: Obtaining the conjugate of the the known neighboring cell $r_{u,v}^{\prime(\alpha)}$, then multiplying with the rough interference signal $I_{\text{freq,ch}}^{(\text{k}_{\alpha\text{R}},\text{n}_\text{s})}$ to obtain the channel frequency-domain response $e_{\text{freq,ch}}^{\prime(\text{k}_{\alpha\text{R}},\text{n}_\text{s})}$ with reference symbol eliminated.

Step7: Subjecting $e'^{(k_{\alpha R}, n_s)}_{freq,ch}$ to IDFT to obtain the channel time-domain impulse response $e'^{(k_{\alpha R}, n_s)}_{time,ch}$

Step8: Subjecting $e'^{(k_{\alpha R}, n_s)}_{time,ch}$ to multi-user separation and windows selection denoising to obtain the single-user time-domain impulse response $e'^{(k_{\alpha R}, k_{UE}, n_s)}_{time,ch}$ after windows selection denoising.

Step9: Subjecting $e'^{(k_{\alpha R}, k_{UE}, n_s)}_{time,ch}$ to DFT to obtain the channel estimation result $H'^{(k_{\alpha R}, k_{UE}, n_s)}$ of the user of the neighboring cell.

Step10: $I^{(k_{\alpha R}, n_s)}_{freq,ch} - H'^{(k_{\alpha R}, k_{UE}, n_s)}$ to obtain the precise interference signal

It should be noted that the rough interference signal set forth in step 2021 is rough as compared with the precise interference signal set forth in step 2022, and the precise interference signal and the rough interference signal are relative.

In a similar way, the rough signal and the precise signal set forth in 1)-10) are also relative.

Step 204 is to reject the precise interference signal.

Preferably, step 204 can include the following steps.

Step 2041 is to perform uplink IRC detection using the precise interference signal to obtain the detection result.

The precise interference signal obtained is subjected to IRC detection to obtain the detection result.

Step 2042 is to reject the precise interference signal according to the detection result.

In conclusion, in the technical scheme of the application, before obtaining the interference signal, the received signal of the current cell is subjected to signal reduction. Estimate is made to interference using the signal with the received signal of the current cell reduced according to the scheduling information of the neighboring cell to obtain a precise interference signal, which has a better rejection effect to the uplink co-frequency interference of the neighboring cell.

Third Embodiment

A device for rejecting interference signal in accordance with the embodiment of the application will be described in detail.

Referring to figure 3, the structural diagram of a device for rejecting interference signal in accordance with the embodiment of the invention is illustrated.

The device can include: a signal reduction module 300, a channel estimation module 302, and an interference rejection module 304.

Functions of each module and relationship between the modules will be introduced respectively in detail below.

The signal reduction module 300 is configured to perform signal reduction on the received signal of the current cell.

The channel estimation module 302 is configured to perform channel estimation on the signal-reduced received signal of the current cell according to a reference signal of the current cell and a reference signal of the neighboring cell to obtain a precise interference signal.

It should be noted that the precise interference signal is a more precise interference signal compared with the interference signal obtained in the prior art.

The interference rejection module 304 is configured to reject the precise interference signal.

In conclusion, in the technical scheme of the application, before obtaining the interference signal, the received signal of the current cell is subjected to signal reduction. Estimate is made to interference using the signal with the received signal of the current cell reduced according to the scheduling information of the neighboring cell to obtain a precise interference signal, which has a better rejection effect to the uplink co-frequency interference of the neighboring cell.

Fourth Embodiment

A device for rejecting interference signal in accordance with the embodiment of the application will be described in detail.

Referring to figure 4, the structural diagram of a device for rejecting interference signal in accordance with the embodiment of the application is illustrated.

The device can include: a signal reduction module 400, a channel estimation module 402, and an interference rejection module 404.

The channel estimation module 402 can include a rough interference signal acquisition module 4021 and a

precise interference signal acquisition module 4022.

The interference rejection module 404 can include an interference detection module 4041 and a precise interference rejection module 4042.

Functions of each module and relationship between the modules will be introduced respectively in detail below.

The signal reduction module 400 is configured to perform signal reduction on the received signal of the current cell.

The channel estimation module 402 is configured to perform channel estimation on the signal-reduced received signal of the current cell according to a reference signal of the current cell and a reference signal of the neighboring cell to obtain a precise interference signal.

It should be noted that the precise interference signal is a more precise interference signal compared with the interference signal obtained in the prior art.

Preferably, the channel estimation module 402 can include:

A rough interference signal acquisition module 4021 configured to perform channel estimation on the signal-reduced received signal of the current cell according to a reference signal of the current cell to obtain a rough interference signal.

Preferably, the rough interference signal acquisition module 4021 can include the following modules.

A rough channel frequency-domain response acquisition module is configured to obtain the conjugate of the reference signal of the current cell, then multiply with the pilot symbol of the signal-reduced received signal of the current cell to obtain a rough channel frequency-domain response with reference signal eliminated.

A rough channel time-domain impulse response acquisition module is configured to subject the rough channel frequency-domain response to IDFT to obtain a rough channel time-domain impulse response.

A rough single-user time-domain impulse response acquisition module is configured to subject the rough channel time-domain impulse response to multi-user separation and windows selection denoising to obtain a rough single-user time-domain impulse response.

A rough channel estimation result acquisition module is configured to subject the rough single-user time-domain impulse response to DFT to obtain the rough channel estimation result of each user.

A rough interference signal acquisition module is configured to subtract the rough channel estimation result of each user from the rough channel frequency-domain response to obtain the rough interference signal.

A precise interference signal acquisition module 4022 is configured to perform channel estimation on the rough interference signal according to a reference signal of the neighboring cell to obtain a precise interference signal.

Preferably, the precise interference signal acquisition module 4022 can include the following modules.

A precise channel frequency-domain response acquisition module is configured to obtain the conjugate of the reference signal of the neighboring cell, and then multiply with the rough interference signal to obtain a precise channel frequency-domain response with reference signal eliminated.

A precise channel time-domain impulse response acquisition module is configured to subject the precise channel frequency-domain response to IDFT to obtain a precise channel time-domain impulse response signal.

A precise single-user time-domain impulse response acquisition module is configured to subject the precise channel time-domain impulse response to multi-user separation and windows selection denoising to obtain a precise single-user time-domain impulse response.

A precise channel estimation result acquisition module is configured to subject the precise single-user time-domain impulse response to Fourier transform to obtain the precise channel estimation result of the neighboring cell.

A precise interference signal acquisition module is configured to subtract the precise channel estimation result of the neighboring cell from the rough interference signal to obtain the precise interference signal.

An interference rejection module 404 is configured to reject the precise interference signal.

Preferably, the interference rejection module 404 can include the following modules.

An interference detection module 4041 is configured to perform uplink IRC detection using the precise interference signal to obtain the detection result.

A precise interference rejection module 4042 is configured to reject the precise interference signal according to the detection result.

In conclusion, in the technical scheme of the application, before obtaining the interference signal, the received signal of the current cell is subjected to signal reduction. Estimate is made to interference using the signal with the received signal of the current cell reduced according to the scheduling information of the neighboring cell to obtain a precise interference signal, which has a better rejection effect to the uplink co-frequency interference of the neighboring cell.

The computer readable recording medium includes any mechanism which is configured to store or transfer information in the computer readable (such as a computer) form. For example, the machine-readable medium includes read-only memory (ROM), random access memory (RAM), disk memory medium, optical memory medium, flash memory medium, and electrical, optical, and acoustic or other forms of propagation signals (such as carrier, infrared signal and digital signal), and the like.

The device embodiments are simply described, because the device embodiments are basically similar to the method embodiments; descriptions of the method embodiments can be consulted for relevant descriptions of device embodiments.

Embodiments in the specifications are described in a progressive way. Emphases on the description of each embodiment are the part different from other embodiments. The same or similar parts of the embodiments can be referred to mutually.

Those skilled in the art can appreciate that all or part of steps according to the above methods can be implemented in hardware associated with the program instruction. The program can be stored in a computer readable storage medium, when the program executed, the steps according to method embodiments above are performed. The mentioned storage medium includes various mediums that can store program codes, such as ROM, RAM, disks, or optical disks and the like.

Lastly it shall be noted that the embodiments above are merely intended to illustrate but not to limit the technical solution of the disclosure; and although the disclosure has been described above in details with reference to the embodiments above, those ordinarily skilled in the art shall appreciate that they can modify the technical solution recited in the respective embodiments above or make equivalent substitutions to a part of the technical features thereof; and these modifications or substitutions to the corresponding technical solution shall also fall into the scope of the disclosure as claimed.

## Claims

**1.** A method for rejecting interference signal, comprising:

performing signal reduction on a received signal of a current cell;
performing channel estimation on the signal-reduced received signal of the current cell according to a reference signal of the current cell and a reference signal of a neighboring cell to obtain a precise interference signal; and
rejecting the precise interference signal.

**2.** The method of claim 1, wherein performing channel estimation on the signal-reduced received signal of the current cell according to the reference signal of the current cell and the reference signal of the neighboring cell to obtain the precise interference signal comprises:

performing channel estimation on the signal-reduced received signal of the current cell according to the reference signal of the current cell to obtain a rough interference signal; and
performing channel estimation on the rough interference signal according to the reference signal of the neighboring cell to obtain the precise interference signal.

**3.** The method of claim 2, wherein performing channel estimation on the signal-reduced received signal of the current cell according to the reference signal of the current cell to obtain the rough interference signal comprises:

obtaining the conjugate of the reference signal of the current cell, then multiplying with a pilot symbol of the signal-reduced received signal of the current cell to obtain a rough channel frequency-domain response with reference signal eliminated;
subjecting the rough channel frequency-domain response to inverse discrete Fourier transform to obtain a rough channel time-domain impulse response;
subjecting the rough channel time-domain impulse response to multi-user separation and windows selection denoising to obtain a rough single-user time-domain impulse response;
subjecting the rough single-user time-domain impulse response to discrete Fourier transform to obtain a rough channel estimation result of each user; and
subtracting the rough channel estimation result of each user from the rough channel frequency-domain response to obtain the rough interference signal.

**4.** The method of claim 3, wherein performing channel estimation on the rough interference signal according to the reference signal of the neighboring cell to obtain the precise interference signal comprises:

obtaining the conjugate of the reference signal of the neighboring cell, then multiplying with the rough interference signal to obtain a precise channel frequency-domain response with reference signal eliminated;
subjecting the precise channel frequency-domain response to inverse discrete Fourier transform to obtain a precise channel time-domain impulse response;

subjecting the precise channel time-domain impulse response to multi-user separation and windows selection denoising to obtain a precise single-user time-domain impulse response;
subjecting the precise single-user time-domain impulse response to Fourier transform to obtain a precise channel estimation result of the neighboring cell;
subtracting the precise channel estimation result of the neighboring cell from the rough interference signal to obtain the precise interference signal.

**5.** The method of claim 1, wherein rejecting the precise interference signal comprises:

performing uplink Interference Rejection Combining detection using the precise interference signal to obtain a detection result; and
rejecting the precise interference signal according to the detection result.

**6.** A device for rejecting interference signal, comprising:

a signal reduction module configured to perform signal reduction on a received signal of a current cell;
a channel estimation module configured to perform channel estimation on the signal-reduced received signal of the current cell according to a reference signal of the current cell and a reference signal of a neighboring cell to obtain a precise interference signal; and
an interference rejection module configured to reject the precise interference signal.

**7.** The device of claim 6, wherein the channel estimation module comprises:

a rough interference signal acquisition module configured to perform channel estimation on the signal-reduced received signal of the current cell according to the reference signal of the current cell to obtain a rough interference signal; and
a precise interference signal acquisition module configured to perform channel estimation on the rough interference signal according to the reference signal of the neighboring cell to obtain the precise interference signal.

**8.** The device of claim 7, wherein the rough interference signal acquisition module comprises:

a rough channel frequency-domain response acquisition module configured to obtain the conjugate of the reference signal of the current cell, then multiply with a pilot symbol of the signal-reduced received signal of the current cell to obtain a rough channel frequency-domain response with reference signal eliminated;
a rough channel time-domain impulse response acquisition module configured to subject the rough channel frequency-domain response to inverse discrete Fourier transform to obtain a rough channel time-domain impulse response;
a rough single-user time-domain impulse response acquisition module configured to subject the rough channel time-domain impulse response to multi-user separation and windows selection denoising to obtain a rough single-user time-domain impulse response;
a rough channel estimation result acquisition module configured to subject the rough single-user time-domain impulse response to discrete Fourier transform to obtain a rough channel estimation result of each user; and
a rough interference signal acquisition module configured to subtract the rough channel estimation result of each user from the rough channel frequency-domain response to obtain the rough interference signal.

**9.** The device of claim 8, wherein the precise interference signal acquisition module comprises:

a precise channel frequency-domain response acquisition module configured to obtain the conjugate of the reference signal of the neighboring cell, then multiply with the rough interference signal to obtain a precise channel frequency-domain response with reference signal eliminated;
a precise channel time-domain impulse response acquisition module configured to subject the precise channel frequency-domain response to inverse discrete Fourier transform to obtain a precise channel time-domain impulse response;
a precise single-user time-domain impulse response acquisition module configured to subject the precise channel time-domain impulse response to multi-user separation and windows selection denoising to obtain a precise single-user time-domain impulse response;
a precise channel estimation result acquisition module configured to subject the precise single-user time-domain impulse response to Fourier transform to obtain a precise channel estimation result of the neighboring cell; and

a precise interference signal acquisition module configured to subtract the precise channel estimation result of the neighboring cell from the rough interference signal to obtain the precise interference signal.

**10.** The device of claim 6, wherein the interference rejection module comprises:

an interference detection module configured to perform uplink Interference Rejection Combining detection using the precise interference signal to obtain a detection result; and
a precise interference rejection module configured to reject the precise interference signal according to the detection result.

**11.** A computer readable recording medium for recording a program for performing the method of claim 1.

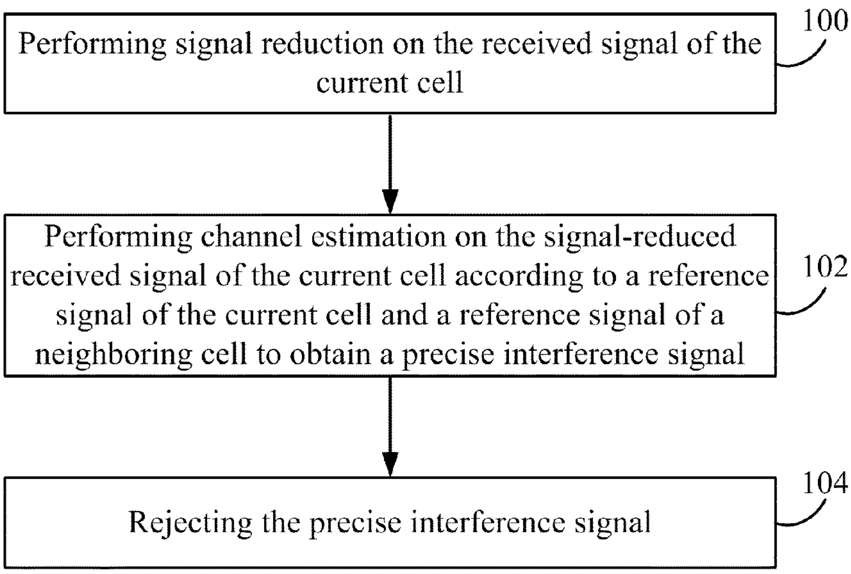
Performing signal reduction on the received signal of the current cell
100
Performing channel estimation on the signal-reduced received signal of the current cell according to a reference signal of the current cell and a reference signal of a neighboring cell to obtain a precise interference signal
102
Rejecting the precise interference signal
104

Fig.1

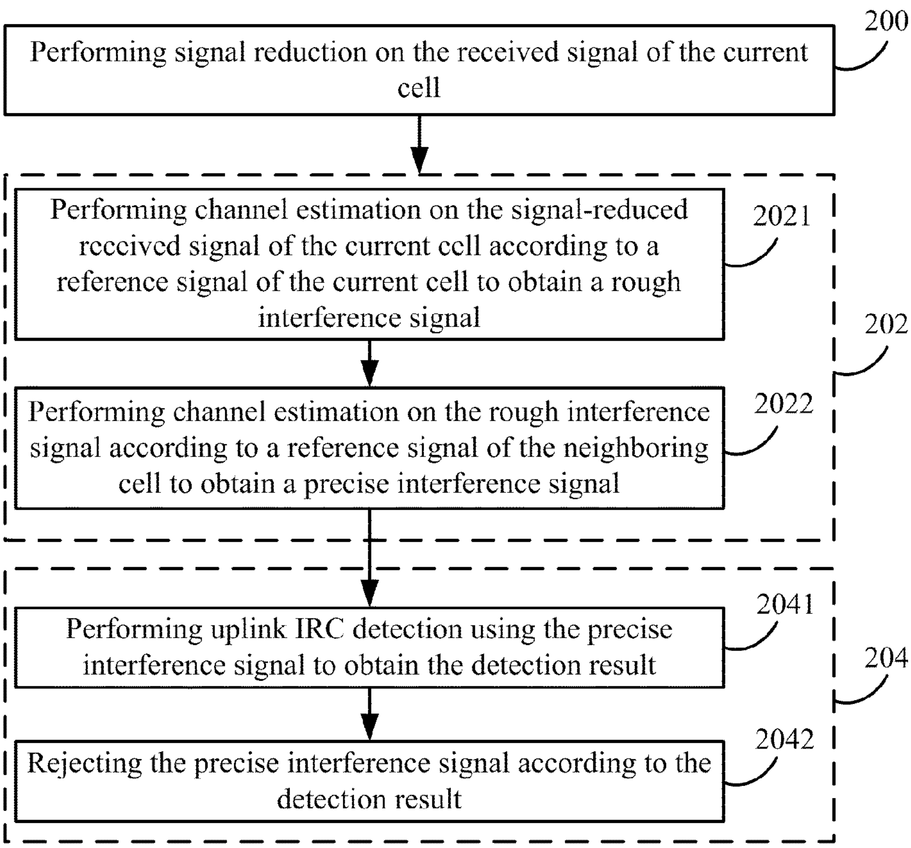
Performing signal reduction on the received signal of the current cell
200
Performing channel estimation on the signal-reduced received signal of the current cell according to a reference signal of the current cell to obtain a rough interference signal
2021
202
Performing channel estimation on the rough interference signal according to a reference signal of the neighboring cell to obtain a precise interference signal
2022
Performing uplink IRC detection using the precise interference signal to obtain the detection result
2041
204
Rejecting the precise interference signal according to the detection result
2042

Fig.2

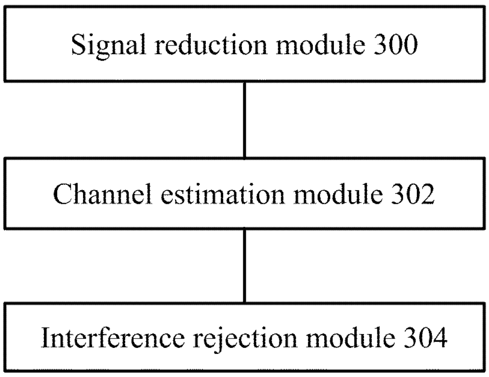


Fig.3

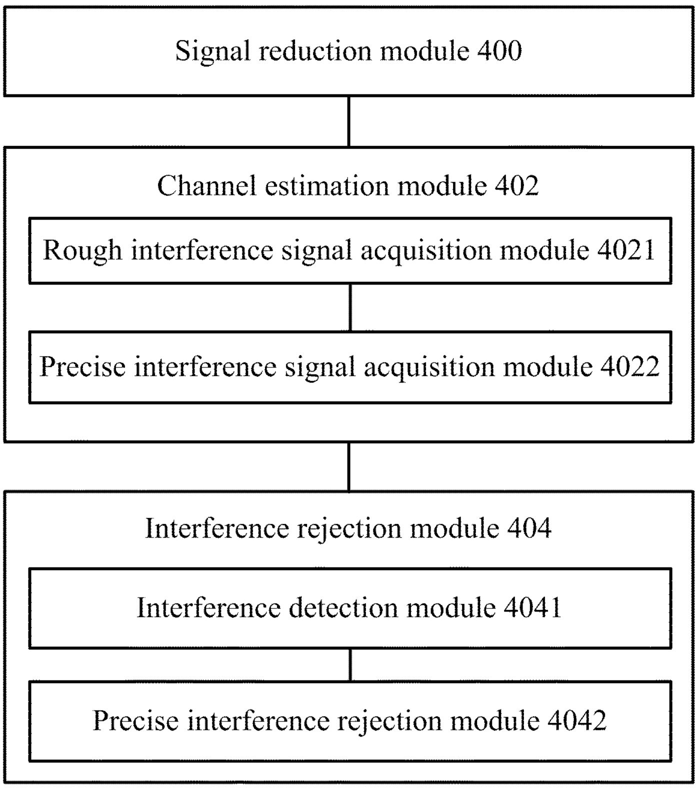


Fig.4

# INTERNATIONAL SEARCH REPORT

International application No.
**PCT/CN2016/076159**

**A. CLASSIFICATION OF SUBJECT MATTER**

H04L 25/03 (2006.01) i

According to International Patent Classification (IPC) or to both national classification and IPC

**B. FIELDS SEARCHED**

Minimum documentation searched (classification system followed by classification symbols)

H04L, H04B, H04J

Documentation searched other than minimum documentation to the extent that such documents are included in the fields searched

Electronic data base consulted during the international search (name of data base and, where practicable, search terms used)

CPRSABS; CNTXT; CNKI; DWPI; VEN: present cell, primary cell, channel estimation, combined detection, adjacent, eliminate, MASTER, MAIN, LOCAL, primary, cell, receive, signal, minus, subtract, deduct, reduce, decrease, suppress, cancellation, interference, noise, precise, exact

**C. DOCUMENTS CONSIDERED TO BE RELEVANT**

| Category* | Citation of document, with indication, where appropriate, of the relevant passages | Relevant to claim No. |
|---|---|---|
| X | CN 102547740 A (HUAWEI TECHNOLOGIES CO., LTD.), 04 July 2012 (04.07.2012), description, paragraphs [0005]-[0017] | 1, 2, 5-7, 10, 11 |
| PX | CN 105072063 A (DATANG MOBILE COMMUNICATIONS EQUIPMENT CO., LTD.), 18 November 2015 (18.11.2015), the whole document | 1-11 |
| A | CN 104702540 A (UNIVERSITY OF ELECTRONIC SCIENCE AND TECHNOLOGY OF CHINA), 10 June 2015 (10.06.2015), the whole document | 1-11 |
| A | CN 101771638 A (HUAWEI DEVICE CO., LTD.), 07 July 2010 (07.07.2010), the whole document | 1-11 |
| A | US 2011014887 A1 (CAMBRIDGE SILICON RADIO LTD.), 20 January 2011 (20.01.2011), the whole document | 1-11 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| | |
|---|---|
| Date of the actual completion of the international search<br>25 May 2016 (25.05.2016) | Date of mailing of the international search report<br>**08 June 2016 (08.06.2016)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br>**PANG, Yan**<br>Telephone No.: (86-10) **62089462** |

Form PCT/ISA/210 (second sheet) (July 2009)

**INTERNATIONAL SEARCH REPORT**
Information on patent family members

International application No.
**PCT/CN2016/076159**

| Patent Documents referred in the Report | Publication Date | Patent Family | Publication Date |
|---|---|---|---|
| CN 102547740 A | 04 July 2012 | US 8918054 B2 | 23 December 2014 |
| | | CN 102547740 B | 25 March 2015 |
| | | US 2013189927 A1 | 25 July 2013 |
| CN 105072063 A | 18 November 2015 | None | |
| CN 104702540 A | 10 June 2015 | None | |
| CN 101771638 A | 07 July 2010 | CN 101771638 B | 30 January 2013 |
| US 2011014887 A1 | 20 January 2011 | DE 102010036394 A1 | 10 February 2011 |
| | | GB 0912585 D0 | 26 August 2009 |

Form PCT/ISA/210 (patent family annex) (July 2009)